# EUROPÄISCHE PATENTSCHRIFT

(11) **EP 1 032 516 B1**
(45) Veröffentlichungstag und Bekanntmachung des Hinweises auf die Patenterteilung: **24.03.2004**
(21) Anmeldenummer: 98964421.6
(22) Anmeldetag: 20.11.1998
(51) Int. Cl.: B60T 7/10, B60T 13/74

(54) **ELEKTROMECHANISCHE FESTSTELLBREMSANLAGE**
ELECTROMECHANICAL PARKING BRAKE SYSTEM
INSTALLATION ELECTROMECANIQUE DE FREINAGE DE STATIONNEMENT

(30) Priorität: 20.11.1997 DE 19751431
(43) Veröffentlichungstag der Anmeldung: 06.09.2000
(73) Patentinhaber: Continental Teves AG & Co. OHG, 60488 Frankfurt am Main (DE)
(72) Erfinder: NELL, Joachim, D-63452 Hanau (DE); SKOTZEK, Peter, D-60439 Frankfurt am Main (DE); HOFFMANN, Oliver, D-60486 Frankfurt am Main (DE); BALZ, Jürgen, D-65510 Hünstetten-Oberlibbach (DE); ECKERT, Alfred, D-55129 Mainz-Hechtsheim (DE); BÖHM, Jürgen, D-65558 Oberneisen (DE)
(86) Internationale Anmeldenummer: PCT/EP1998/007476
(87) Internationale Veröffentlichungsnummer: WO 1999/026818

(56) Entgegenhaltungen:
- DE-A- 4 129 919
- DE-A- 19 653 541
- DE-C- 19 615 186
- FR-A- 2 691 934
- US-A- 5 362 135

## Beschreibung

Die vorliegende Erfindung betrifft eine elektromechanische Feststellbremsanlage für Kraftfahrzeuge mit einer Bremsbedieneinrichtung, einer elektronischen Steuereinrichtung zur Umwandlung von Eingangssignalen in entsprechende Ausgangssignale, und mindestens zwei motorisch betätigbare Feststellbremsen, die in Abhängigkeit von den Ausgangssignalen der Steuereinrichtung ansteuerbar sind.

Eine derartige Feststellbremsanlage ist z.B. aus der DE 41 29 919 A1 bekannt. Dort ist ein elektronisches Steuergerät mit unterschiedlichen Sensoren zur Erfassung eines Betriebszustands des Kraftfahrzeugs und mit einer durch den Fahrer verstellbaren Bremsbetätigungseinrichtung elektrisch verbunden. Das Spannen und Lösen der Radbremsen wird in Abhängigkeit von Signalen der Bremsbetätigungseinrichtung und der Sensoren gesteuert. Diese bekannte Feststellbremsanlage enthält allerdings keine Vorkehrungen, durch die bei Störungen der Elektronik zumindest ein Notbetrieb der Feststellbremsen gewährleistet werden kann. Es ist lediglich eine von Hand betätigbare Hilfslöseeinrichtung vorgesehen, durch die ein Lösen der gespannten Radbremsen bei gestörter Energieversorgung ermöglicht wird.

Aus der DE 196 15 186 C1 ist eine elektromechanische Bremsanlage für Kraftfahrzeuge bekannt, deren Radbremsaktuator derart aufgebaut ist, dass der Rotor eines Elektromotors gleichzeitig die Funktion einer Spindelmutter eines Rotations/Translationsgetriebes ausübt. Zur Durchführung eines Feststellbremsvorgangs ist das Getriebe bei dem vorbekannten Radbremsaktuator selbsthemmend ausgebildet. Außerdem ist der Bremskreis jeder Fahrzeugachse mit einem Steuergerät und zwei Steuerelektronikeinheiten versehen. Ein möglicher Defekt des Steuergeräts hat dabei unweigerlich den Ausfall der Rad- bzw. Feststellbremsen einer Fahrzeugsachse zur Folge.

Aufgabe der Erfindung ist es, eine Feststellbremsanlage der eingangs genannten Art zu schaffen, die eine erhöhte Funktionssicherheit aufweist.

Diese Aufgabe wird erfindungsgemäß dadurch gelöst, dass die elektronische Steuereinrichtung drei parallel arbeitende Steuereinheiten zur getrennten Verarbeitung der Eingangssignale enthält, die mit mindestens zwei Endstufen zur getrennten Ansteuerung jeweils eines Stellmotors an gegenüberliegenden Feststellbremsen einer Fahrzeugachse verbunden sind und dass die elektronische Steuereinrichtung mindestens einen den Steuereinheiten nachgeschalteten Voter zur Bildung einer Mehrheitsentscheidung enthält. Durch diese Maßnahmen wird bei Abweichungen zwischen den Ausgangssignalen der Steuereinheiten eine Mehrheitsentscheidung getroffen und das von den anderen Ausgangssignalen abweichende Signal ausgeschlossen. Die beiden übereinstimmenden Signale können dann an getrennte Endstufen zur Ansteuerung unterschiedlicher Stellmotoren weitergeleitet werden. Auf diese Weise ist eine sogenannte Fail-active-Redundanz erreichbar.

Als Eingangssignal kann den Steuereinheiten ein z.B. mittels Potentiometer durch den Fahrer einstellbarer Sollwert zugeführt werden, der in den Steuereinheiten verarbeitet und in entsprechende Ausgangssignale zur Ansteuerung der Stellmotoren an den Feststellbremsen umgewandelt wird. Dies ermöglicht ein dosiertes Spannen und Lösen der Feststellbremsen durch den Fahrer.

Das Potentiometer kann bei einer zweckmäßigen Ausführung mit zwei parallel geschalteten Schaltern gekoppelt sein, die in einer Betriebsstellung des Potentiometers eine elektrische Verbindung zwischen den Steuereinheiten und einer Energieversorgungseinheit herstellen. Dadurch ist eine getrennte Energieversorgung der Steuereinheiten möglich.

In einer weitern vorteilhaften Ausführung ist auch eine von Fahrer unabhängige automatische Betätigung der Feststellbremsen realisierbar. Dies kann z.B. über einen Signalwandler erfolgen, der durch Sensoren ermittelte Betriebszustandsgrößen, wie z.B. Raddrehzahl, Gaspedalstellung, Bremsdruck, Neigungswinkel, Gangwahl o.ä., in Eingangssignale für die Steuereinheiten umwandelt. In den Steuereinheiten kann dann aus diesen Eingangssignalen über einen speziellen Algorithmus ein Bedarf für das Feststellen oder Lösen der Feststellbremsen ermittelt werden. Über einen weiteren Algorithmus kann dann die jeweilige Ansteuerung der Feststellbremsen erfolgen.

Bei einer Feststellbremsanlage mit automatischer Betätigung der Feststellbremsen kann als Bedienungselement auch ein Drehschalter mit mehreren Raststellungen verwendet werden, durch den z.B. zwischen einem Automatikbetrieb und zwischen Stellungen zum manuellen Lösen und Feststellen der Bremsen umgeschaltet werden kann.

Eine zusätzliche Sicherheit gegen Störungen der Energieversorgung ist dadurch erreichbar, daß in den von einer Energieversorgungseinheit zu der Steuereinrichtung führenden Leitungen ein Zusatzschalter zur Umschaltung auf eine Notversorgung angeordnet ist. Ein derartiger Zusatzschalter kann in das Bedienungselement integriert oder als gesonderter Notschalter ausgebildet sein.

Weitere Besonderheiten und Vorteile der Erfindung ergeben sich aus der folgenden Beschreibung bevorzugter Ausführungsbeispiele anhand der Zeichnung. Es zeigen:
- Fig. 1: eine schematische Darstellung einer Feststellbremsanlage nicht gemäß der Erfindung und
- Fig. 2: eine schematische Darstellung einer erfindungsgemäßen Feststellbremsanlage.

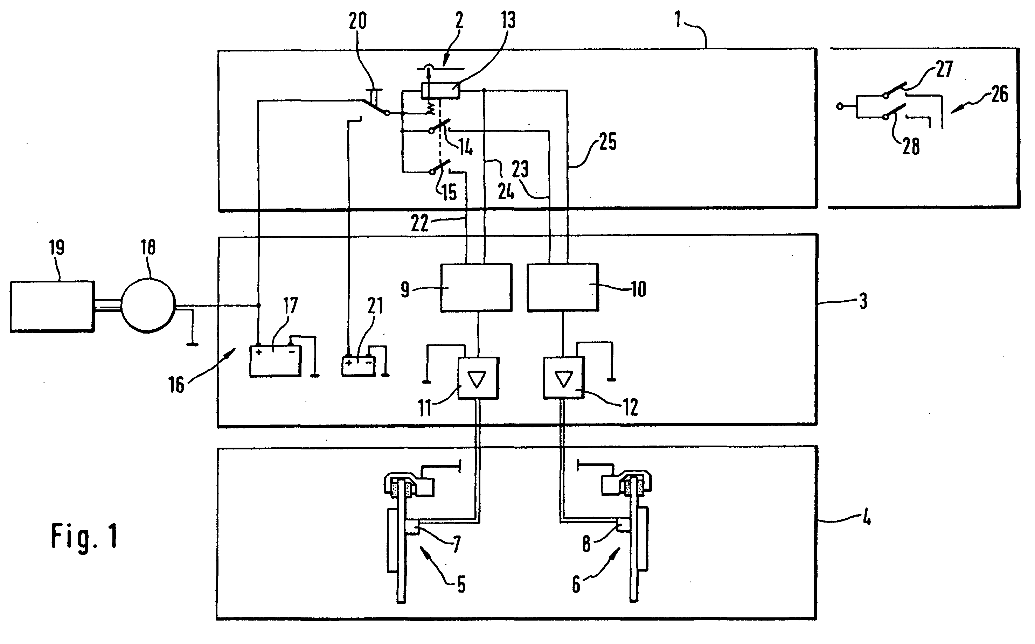

Die in Fig. 1 gezeigte Feststellbremsanlage enthält eine Bremsbedienungseinrichtung 1 mit einem Bedienungselement 2 zur Vorgabe von Eingangssignalen durch den Fahrer, eine elektronische Steuereinrichtung 3 zur Umwandlung der durch die Bremsbedienungseinrichtung 1 vorgegebenen Eingangssignale in entsprechende Ausgangssignale und eine Bremseinrichtung 4 mit Festellbremsen 5 und 6, die durch Stellmotoren 7 bzw. 8 entsprechend der von der elektronischen Steuereinrichtung 3 gelieferten Ausgangsignale betätigbar sind.

Die elektronische Steuereinrichtung 3 ist aus zwei voneinander getrennten Zweigen mit jeweils einer Steuereinheit 9 und 10 und je einer zugehörigen Endstufe 11 bzw. 12 aufgebaut. Durch den ersten Zweig wird der Stellmotor 7 zur Betätigung der linken Feststellbremse 5 und durch den zweiten Zweig der Stellmotor 8 zur Betätigung der rechten Feststellbremse 6 an einer Fahrzeugachse angesteuert. Die Stellmotoren 7 und 8 können z.B. über ein selbsthemmendes Spindel-Mutter-Getriebe ein konventionelles Spreizschloß betätigen, durch das die Bremsbacken einer bekannten Duo-Servo-Trommelbremse verstellbar sind. Eine Betätigung der Feststellbremse mittels Stellmotoren ist allerdings auch bei Simplex- Bremsen oder Kombisattel-Bremsen möglich.

Das Bedienungselement 2 besteht bei der in Fig. 1 gezeigten Ausführung aus einem durch den Fahrer betätigbaren Potentiometer 13 mit zwei integrierten redundanten Schaltern 14 und 15, die in elektrischen Leitungsverbindungen zwischen einer Energieversorgungseinheit 16 und den beiden Steuereinheiten 9 und 10 angeordnet sind. Ein derartiges Bedienungselement benötigt nur einen geringen Einbauraum und kann z.B. im Armaturenbrett, am Lenkrad, in der Mittelkonsole oder an einer sonstigen geeigneten Stelle plaziert und über einen Drehknopf, Schieber, Hebel oder dgl. betätigbar sein. Die Energieversorgungseinheit 16 wird durch eine Autobatterie 17 und einem Generator 18 gebildet, der von einem Fahrzeugmotor 19 angetrieben wird. Zwischen dem Bedienungselement 2 und der Energieversorgungseinheit 16 ist ein Zusatzschalter 20 angeordnet, durch den eine elektrische Verbindung zu einer Reservebatterie 21 hergestellt werden kann. Dadurch kann auch bei Ausfall der Energieversorgung 16 ein Betrieb der Feststellbremsen aufrechterhalten werden.

Das Potentiometer 13 und die beiden Schalter 14 und 15 sind derart geschaltet, daß in einer Betriebsstellung des Potentiometers 13 beide Schalter 14 und 15 geschlossen sind und dabei jedes Steuerelement 9 und 10 über je eine elektrische Leitung 22 und 23 mit der Energieversorgungseinheit 16 verbinden. Über die gesonderten Leitungen 22 und 23 können somit die beiden Steuereinheiten 9 und 10 getrennt mit Energie versorgt werden. Das Potentiometer 13 ist über weitere gesonderte Leitungen 24 bzw. 25 mit jeweils einer Steuereinheit 9 und 10 verbunden. Dadurch kann jeder Steuereinheit 9 und 10 ein von der Potentiometerstellung abhängiger Sollwert zugeführt werden.

In den beiden Steuereinheiten 9 und 10 wird der über das Potentiometer 13 einstellbare Sollwert z.B. in einen Stromsollwert umgewandelt und an die Endstufen 11 bzw. 12 zur Ansteuerung der Stellmotoren 7 und 8 weitergeleitet. Eine Stromregelung kann dabei alternativ in den Steuereinheiten 9 und 10 oder den Endstufen 11 und 12 realisiert werden.

Bei der gezeigten Ausführung kann über das Potentiometer 13 die Bremskraft durch den Fahrer eingestellt und ein dosiertes Spannen und Lösen der Feststellbremsen erreicht werden. Dies kann z.B. beim Rangieren oder Anfahren an Steigungen hilfreich sein. Anstelle eines Potentiometers können aber auch andere Bedienungselemente zur Lieferung eines durch den Fahrer einstellbaren Sollwertes verwendet werden.

In einer vereinfachten Ausführung kann das Bedienungselement 2 auch lediglich ein Schaltelement 26 mit zwei parallelen Schaltern 27 und 28 zur Herstellung bzw. Unterbrechung einer getrennten Stromverbindung zwischen der Energieversorgungseinheit 16 und den jeweiligen Steuereinheiten 9 bzw. 10 sein. Dadurch können die Feststellbremsen entweder gelöst oder z.B. mit maximaler Bremskraft betätigt werden.

Tritt bei der Ausführung gemäß Fig. 1 ein elektrischer Fehler in einem der Zweige auf, kann über den anderen Zweig immer noch einer der Stellmotoren 7 oder 8 zur Verstellung wenigstens einer Feststellbremse betätigt werden. Durch eine derartige Redundanz wird eine erhöhte Sicherheit gewährleistet. Bei einem Ausfall der Energieversorgungseinheit 16 kann über den Zusatzschalter 20 die Reservebatterie 21 zur Versorgung der Steuereinheiten 9 und 10 und der Motoren 7 und 8 zugeschaltet werden. Bei Fahrzeugen mit Automatikgetriebe ist eine Reservebatterie nicht erforderlich, da im Falle eines elektrischen Fehlers die Parksperre im Getriebe zum Halten des Fahrzeugs genutzt werden kann.

Wenn die motorische Betätigung der Feststellbremsen über ein selbsthemmendes Getriebe erfolgt, muß die Steuereinrichtung 3 mit den beiden Steuereinheiten 9 und 10 nicht ständig aktiviert sein. Da das selbsthemmende Getriebe die Feststellbremse unter mechanischer Spannung hält, kann die elektronische Steuerung beispielsweise abgeschaltet werden, wenn das Potentiometer über längere Zeit nicht betätigt oder das Fahrzeug für längere zeit nicht bewegt wird. Ein Signal für das Abschalten der Steuereinheiten kann z.B. durch ein Stellglied mit Abschaltverzögerung oder aus der Zentralverriegelung beim Verschließen des Fahrzeugs gewonnen werden. Über die Zündung oder die Zentralverriegelung beim Öffnen des Fahrzeugs kann eine Aktivierung der Steuereinheiten erreicht werden.

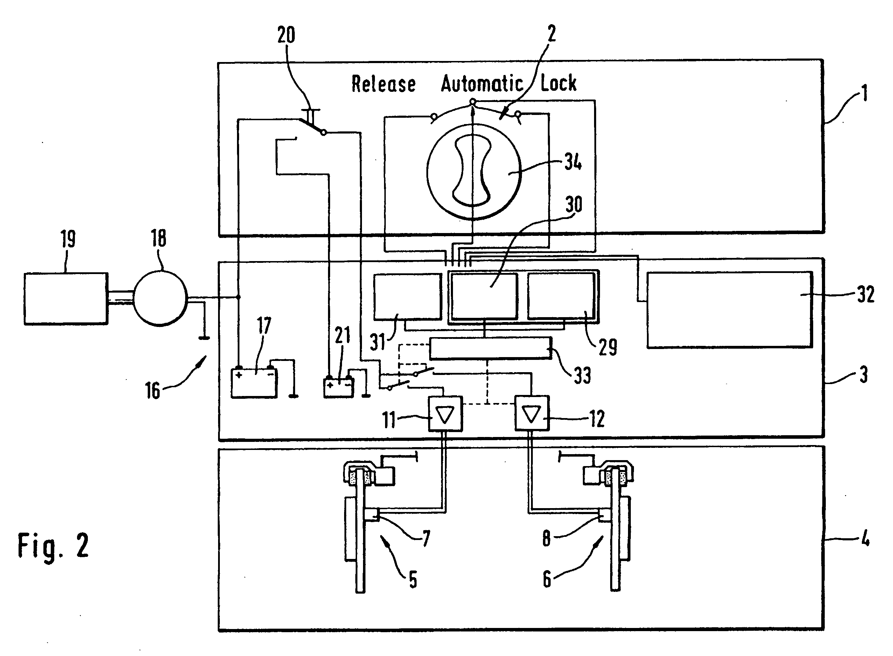

Das Ausführungsbeispiel nach Fig. 2 unterscheidet sich von dem nach Fig. 1 im wesentlichen dadurch, daß die Steuereinrichtung 3 drei gesonderte Steuereinheiten 29, 30 und 31 enthält und außerdem eine automatische Betätigung der Feststellbremsen vorgesehen ist. Alle drei Steuereinheiten 29 bis 31 erhalten konsistente Eingangsdaten über einen Signalwandler 32, der durch Sensoren erfaßte Betriebszustandsgrößen, wie z.B. Raddrehzahl, Gaspedalstellung, Bremsdruck, Neigungswinkel, Gangwahl usw., in entsprechende Eingangssignale umwandelt. In den Steuereinheiten 29, 30 und 31 werden diese Eingangssignale getrennt verarbeitet und die Ergebnisse in einer nachgeschalteten Auswahleinheit bzw. einem Voter 33 ausgewertet. Bei Abweichungen zwischen den Ausgangssignalen der Steuereinheiten 29, 30 und 31 bildet der Voter 33 eine Mehrheitsentscheidung, die z.B. in Form eines Stromsollwertes analog der ersten Ausführungsform an die Endstufen 11 und 12 zur Ansteuerung der Stellmotoren 7 und 8 weitergeleitet wird.

Analog zur Ausführungsform nach Fig. 1 ist auch bei der in Fig. 2 gezeigten Ausführung für Schaltgetriebefahrzeuge eine Reservebatterie 21 vorgesehen, die über einen Zusatzsschalter 20 anstelle der Energieversorgungseinheit 16 an Versogungsleitungen zu den Endstufen 11 und 12 angeschlossen werden kann.

Das Bedienungselement 2 besteht bei der Ausführung gemäß Fig. 2 aus einem Drehschalter 34 mit mehreren Raststellungen, durch den zwischen einer verriegelungsstellung, einer Lösestellung und einer Automatikstellung gewählt werden kann. Durch diesen Drehschalter 34 ist der Fahrer trotz einer automatischen Feststellbremsenbetätigung in der Lage die Feststellbremse zu aktivieren (z.B. bei Panne, Wartung) oder selbst zu deaktiviern (z.B. zum Einparken am Berg).

In der Automatikstellung des Drehschalters 34 werden die auf den Sensorsignalen basierenden Eingangswerte eingelesen und in den Steuereinheiten ausgewertet. Über einen speziellen Algorithmus kann die Betätigung der Feststellbremsen in Abhängigkeit von den durch die Sensoren erfaßten Betriebszuständen des Kraftfahrzeugs gesteuert werden. Will z.B. ein Fahrer am Berg rangieren , ohne den Gang zu wechseln (1. Gang eingelegt, vorwärts fahren: einkuppeln, rückwärts rollen: auskuppeln), ist es möglich , das Regelziel (langsam fahren, Abstand einstellen) anhand der Pedalstellung und/oder der 1. Ableitung der Gas-/Bremspedalstellung zu erkennen. In diesem Fall kann der Lösealgorithmus auf ein langsames Lösen eingestellt werden. Betätigt ein Fahrer hingegen das Gaspedal schnell, möchte er beschleunigen. Dann kann die Bremse schnell gelöst werden. Die Lösegeschwindigkeit der Feststellbremsen kann z.B. über die Gas-/Bremspedalgeschwindigkeit gesteuert werden. Es ist beispielsweise eine Steuerung möglich, bei der die Lösegeschwindigkeit mit zunehmender Pedalgeschwindigkeit treppenförmig oder linear bis zu einer maximalen Lösegeschwindigkeit zunimmt. Es ist aber auch eine Steuerung nur mit einer hohen und niedrigen Lösegeschwindigkeit in Abhängikeit von einer Pedalgeschwindigkeitsschwelle denkbar.

## Patentansprüche

1. Elektromechanische Feststellbremsanlage für Kraftfahrzeuge mit einer Bremsbedieneinrichtung (1), einer elektronischen Steuereinrichtung (3) zur Umwandlung von Eingangssignalen in entsprechende Ausgangssignale, und mindestens zwei motorisch betätigbare Feststellbremsen (5, 6), die in Abhängigkeit von den Ausgangssignalen der Steuereinrichtung (3) ansteuerbar sind, **dadurch gekennzeichnet, dass** die elektronische Steuereinrichtung drei parallel arbeitende Steuereinheiten (29, 30, 31) zur getrennten Verarbeitung der Eingangssignale enthält, die mit mindestens zwei Endstufen (11, 12) zur getrennten Ansteuerung jeweils eines Stellmotors (7, 8) an gegenüberliegenden Feststellbremsen (5, 6) einer Fahrzeugachse verbunden sind und dass die elektronische Steuereinrichtung (3) mindestens einen den Steuereinheiten nachgeschalteten Voter (33) zur Bildung einer Mehrheitsentscheidung enthält.

2. Feststellbremsanlage nach Anspruch 1, **dadurch gekennzeichnet, dass** die Steuereinrichtung (3) einen Signalwandler (32) zur Umwandlung durch Sensoren erfasster Betriebszustände in Eingangssignale für die Steuereinheiten (29, 30, 31).

3. Feststellbremsanlage nach Anspruch 1 oder 2, **dadurch gekennzeichnet, dass** die Bedienungseinrichtung (1) mindestens ein mit den Steuereinheiten (29, 30, 31) elektrisch verbundenes Bedienungselement (2) zur Vorgabe,von Eingangssignalen durch den Fahrer enthält.

4. Feststellbremsanlage nach Anspruch 3, **dadurch gekennzeichnet, dass** das Bedienungselement (2) ein Potentiometer (13) mit redundanten Schaltern (14, 15) zur Vorgabe getrennter Eingangssignale an die Steuereinheiten (29, 30, 31) ist.

5. Feststellbremsanlage nach Anspruch 3, **dadurch gekennzeichnet, dass** das Bedienungselement (2) ein Drehschalter (34) mit mehreren Raststellungen ist.

6. Feststellbremsanlage nach einem der vorhergehenden Ansprüche, **dadurch gekennzeichnet, dass** das Bedienungseinheit (1) einen Zusatzschalter (20) zur Umschaltung in eine Notenergieversorgung (21) enthält.

7. Feststellbremsanlage nach einem der vorhergehenden Ansprüche, **dadurch gekennzeichnet, dass** die Lösegeschwindigkeit der Feststellbremsen (5, 6) in Abhängigkeit von einer Gas-/Bremspedalstellung und/oder der 1.Ableitung der Gas-/Bremspedalsteuerung steuerbar ist.

8. Feststellbremsanlage nach Anspruch 7, **dadurch gekennzeichnet, dass** die Lösegeschwindigkeit der Feststellbremsen (5, 6) mit einer linearen oder treppenförmigen Zunahme bei steigender Pedalgeschwindigkeit steuerbar ist.

## Claims

1. Electromechanical parking brake system for automotive vehicles including a brake actuation device (1), an electronic control device (3) for converting input signals into corresponding output signals, and at least two parking brakes (5, 6) that can be operated by a motor and are actuatable in response to the output signals of the control device (3),
**characterized in that** the electronic control device (3) is comprised of three parallel operating control units (29, 30, 31) for the separate processing of the input signals, being connected to at least two final stages (11, 12) for separately actuating each one servomotor (7, 8) on opposite parking brakes (5, 6) of a vehicle axle, and **in that** the electronic control device (3) comprises at least one voter (33) inserted downstream of the control units and used to produce a majority decision.

2. Parking brake system as claimed in claim 1,
**characterized in that** the control device (3) comprises a signal converter (32) for the conversion of operating condition signals determined by sensors into input signals for the control units (29, 30, 31).

3. Parking brake system as claimed in claim 1 or 2,
**characterized in that** the actuation device (1) comprises at least one operating element (2) that is electrically connected to the control units (29, 30, 31) for the supply of preset input signals by the driver.

4. Parking brake system as claimed in claim 3,
**characterized in that** the operating element (2) is a potentiometer (13) with redundant switches (14, 15) for the supply of preset separate input signals to the control units (29, 30, 31).

5. Parking brake system as claimed in claim 3,
**characterized in that** the operating element (2) is a rotary switch (34) with several lock-in positions.

6. Parking brake system as claimed in any one of the preceding claims,
**characterized in that** the actuation device (1) comprises an additional switch (20) for change-over to an emergency energy supply mode (21).

7. Parking brake system as claimed in any one of the preceding claims,
**characterized in that** the release speed of the parking brakes (5, 6) is controllable in dependence on an accelerator pedal/brake pedal position and/or the first derivative of the accelerator pedal/brake pedal position.

8. Parking brake system as claimed in claim 7,
**characterized in that** the release speed of the parking brakes (5, 6), at rising pedal speed, is controllable with a linear or step-like increase.

## Revendications

1. Système électromécanique de freinage de stationnement pour véhicule automobile comportant un dispositif de manoeuvre du frein (1), un dispositif électronique de commande (3) pour convertir des signaux d'entrée en signaux de sortie correspondants, et au moins deux freins de stationnement (5, 6) actionnables de manière motorisée qui peuvent être commandés en fonction des signaux de sortie du dispositif de commande (3),
**caractérisé en ce que** le dispositif de commande électronique contient trois unités de commande (29, 30, 31) fonctionnant en parallèle pour le traitement séparé des signaux d'entrée, lesquelles sont reliées à au moins deux étages terminaux (11, 12) pour la commande séparée d'un servomoteur (7, 8) respectif sur des freins de stationnement (5, 6) opposés d'un essieu du véhicule, et **en ce que** le dispositif de commande électronique (3) contient au moins un dispositif de décision (33) monté en aval des unités de commande, pour former une décision majoritaire.

2. Système de freinage de stationnement selon la revendication 1, **caractérisé en ce que** le dispositif de commande (3) comporte un convertisseur de signaux (32) pour convertir des états de fonctionnement, détectés par des capteurs, en signaux d'entrée pour les unités de commande (29, 30, 31).

3. Système de freinage de stationnement selon la revendication 1 ou 2, **caractérisé en ce que** le dispositif de manoeuvre (1) contient au moins un élément de manoeuvre (2), relié électriquement aux unités de commande (29, 30, 31), pour la sélection de signaux d'entrée par le conducteur.

4. Système de freinage de stationnement selon la revendication 3, **caractérisé en ce que** l'élément de manoeuvre (2) est un potentiomètre (13) avec des commutateurs redondants (14, 15) pour la sélection de signaux d'entrée destinés aux unités de commande (29, 30, 31).

5. Système de freinage de stationnement selon la revendication 3, **caractérisé en ce que** l'élément de manoeuvre (2) est un commutateur tournant (34) comportant plusieurs positions d'arrêt.

6. Système de freinage de stationnement selon l'une des revendications précédentes, **caractérisé en ce que** l'unité de manoeuvre (1) contient un commutateur supplémentaire (20) pour la commutation dans une alimentation en énergie de secours (21).

7. Système de freinage de stationnement selon l'une des revendications précédentes, **caractérisé en ce que** la vitesse de desserrage des freins de stationnement (5, 6) peut être commandée en fonction d'une position de la pédale d'accélérateur/de frein et/ou de la 1^{ère} dérivée de la commande de la pédale d'accélérateur/pédale de frein.

8. Système de freinage de stationnement selon la revendication 7, **caractérisé en ce que** la vitesse de desserrage des freins de stationnement (5, 6) peut être commandée avec une augmentation linéaire ou par paliers pour une vitesse croissante de la pédale.
